**Europäisches Patentamt**

**European Patent Office**

**Office européen des brevets**

(19)

(11) Veröffentlichungsnummer: **0 184 671**
**B1**

(12) **EUROPÄISCHE PATENTSCHRIFT**

(45) Veröffentlichungstag der Patentschrift:
08.03.89

(51) Int. Cl.⁴: **D 01 H 5/02**

(21) Anmeldenummer: **85114155.6**

(22) Anmeldetag: **07.11.85**

(54) **Streckkopf für ein Streckwerk zum Verziehen von Wollvlies o. dgl.**

(30) Priorität: **05.12.84 DE 3444272**

(43) Veröffentlichungstag der Anmeldung:
**18.06.86 Patentblatt 86/25**

(45) Bekanntmachung des Hinweises auf die Patenterteilung:
**08.03.89 Patentblatt 89/10**

(84) Benannte Vertragsstaaten:
**AT BE CH DE FR GB IT LI NL SE**

(56) Entgegenhaltungen:
**EP-A-0 045 025**
**DE-C-35 504**
**GB-A-481 304**

(73) Patentinhaber: **Staedtler & Uhl, Nördliche Ringstrasse 12, D-8540 Schwabach (DE)**

(72) Erfinder: **Egerer, Josef, Beim Biengarten 2b, D-8540 Schwabach (DE)**

(74) Vertreter: **Rau, Manfred, Dr. Dipl.- Ing., Rau & Schneck, Patentanwälte Königstrasse 2, D-8500 Nürnberg 1 (DE)**

EP 0 184 671 B1

**Beschreibung**

Die Erfindung richtet sich auf einen Streckkopf für ein Streckwerk zum Verziehen von Wollvlies od.dgl. gemäß dem Oberbegriff von Anspruch 1.

Bei bekannten derartigen Streckköpfen sitzen die zum Verziehen von Wollvlies und dgl. dienenden, jeweils eine Vielzahl von Nadeln tragenden Nadelstäbe auf umlaufenden Walzen, wobei die Nadeln eine Kreisbogenbewegung beschreiben. Es ist auch schon versucht worden, die Nadelstäbe längs des Arbeitsbereiches über eine größere Strecke gerade durch das zu streckende Material zu bewegen, wobei der Antrieb der Nadelstäbe über Zahnketten erfolgte. Derartige Zahnkettenantriebe weisen aber den grundsätzlichen Nachteil auf, daß sie mechanisch anfällig sind und starke Geräusche verursachen.

Hiervon ausgehend liegt der Erfindung die Aufgabe zugrunde, einen Streckkopf so auszugestalten, daß die Nadelstäbe schnell, exakt und zuverlässig bei geringer Geräuschentwicklung geführt werden können, wobei eine solche Führung auch dann gewährleistet sein soll, wenn auf die einzelnen Nadelstäbe hohe, gegebenenfalls auch unterschiedliche, der Antriebskraft entgegengesetzte Kräfte und Kippmomente einwirken.

Diese Aufgabe wird gelöst durch den kennzeichnenden Teil von Anspruch 1. Die danach vorgesehenen, erfindungsgemäß angeordneten Drehlager an den Nadelstäben stellen sicher, daß zwischen den einzelnen Nadelstäben eine reine Rollreibung auftritt, d. h. sowohl die Führung der Nadelstäbe in der Führungsbahn wird über eine reine Rollreibung bewerkstelligt als auch die Übertragung von längs der Führungsbahn wirkenden Antriebskräfte ebenso wie die Abstandshaltung bei den Antriebskräften entgegenwirkenden, während Bearbeitungsvorgangs od. dgl. auftretenden Kräften. Die Drehlager größeren Durchmessers übernehmen dabei die Lagerung auf der Führungsbahn, während die Rollen kleineren Durchmessers die Kraftübertragung parallel zur Führungsbahn gewährleisten. Die Drehlager kleineren Durchmessers kommen also nicht in Kontakt mit der Führungsbahn. Gleichzeitig ist gewährleistet, daß die in gleicher Drehrichtung abrollenden Drehlager größeren Durchmessers untereinander nicht in Kontakt kommen, so daß auch insoweit jegliche Gleitreibung vermieden wird. Hierdurch ist es insbesondere auch möglich, nur einzelne Nadelstäbe anzutreiben und über den Rollkontakt der einzelnen Nadelstäbe zueinander die Antriebskraft zu übertragen, so daß selbst beim Auftreten zusätzlicher, der Antriebskraft entgegenstehender Kräfte eine zuverlässige Führung und ein definierter Antrieb erreicht werden.

In weiterer Ausgestaltung der Erfindung kann der Antrieb entsprechend Anspruch 2 erfolgen. Ein derartiges Regelrad gewährleistet im Falle eines konventionellen Antriebs über dieses eine gleichmäßige Kraftübertragung auf eine Mehrzahl von Nadelstäben und damit auf die Gesamtheit der anzutreibenden Nadelstäbe. Weiterhin wird eine sichere Führung längs eines gegebenenfalls auch stark gekrümmten Kurvenbereiches erreicht. Im Falle eines direkt auf die Nadelstäbe wirkenden Antriebs kann das Regelrad entsprechend Anspruch 3 auch als Abtrieb zur Übertragung der Bewegung der Nadelstäbe auf nachgeschaltete oder assoziierte Aggregate dienen.

Gemäß Anspruch 4 ist bei einem derartigen Streckkopf vorgesehen, daß die Maschinenelemente, d. h. die Nadelträger bzw. Nadelstäbe, von einem Linearmotor elektromagnetisch angetrieben werden. Der Antrieb von Nadelstäben und Streckköpfen ist aus dem deutschen Patent 3 028 376 an sich bereits bekannt. Für die praktische Realisierung eines derartigen elektromagnetischen Antriebs von Nadelstäben ist aber die erfindungsgemäße Ausgestaltung von entscheidender praktischer Bedeutung, da erst durch die danach vorgesehene Führung der Vorteil der schnellen Schalt- und Regelbarkeit von Linearmotoren ausgenutzt werden kann und nicht durch die Nachteile mechanischer Komponenten erheblich eingeschränkt wird.

Gemäß Anspruch 5 ist dabei vorteilhafterweise vorgesehen, daß jedes Maschinenelement, d. h. jeder Nadelstab, wenigstens einen Magnetanker trägt. Hierdurch wirken die Antriebskräfte unmittelbar auf die parallel zueinander geführten Nadelstäbe.

Weitere Merkmale, Vorteile und Einzelheiten der Erfindung ergeben sich aus der folgenden Beschreibung einer bevorzugten Ausführungsform anhand der Zeichnung. Dabei zeigen

Fig. 1    eine schematische Darstellung einer möglichen Führungsbahn für Nadelstäbe,

Fig. 2    einen Schnitt längs der Linie II - II in Fig. 1,

Fig. 3    eine schematische Seitenansicht der erfindungsgemäßen Anordnung der Drehlagerelemente in der Führungsbahn, Fig. 4    einen Schnitt längs der Linie IV - IV in Fig. 3,

Fig. 5    eine schematische Ansicht eines erfindungsgemäßen Regelrades an einem kreisabschnittsförmigen Teil der Führungsbahn, und

Fig. 6    einen schematischen Schnitt durch eine erfindungsgemäße Vorrichtung bei der Verwendung in einem Streckkopf für Textilmaschinen mit Linearmotorantrieb.

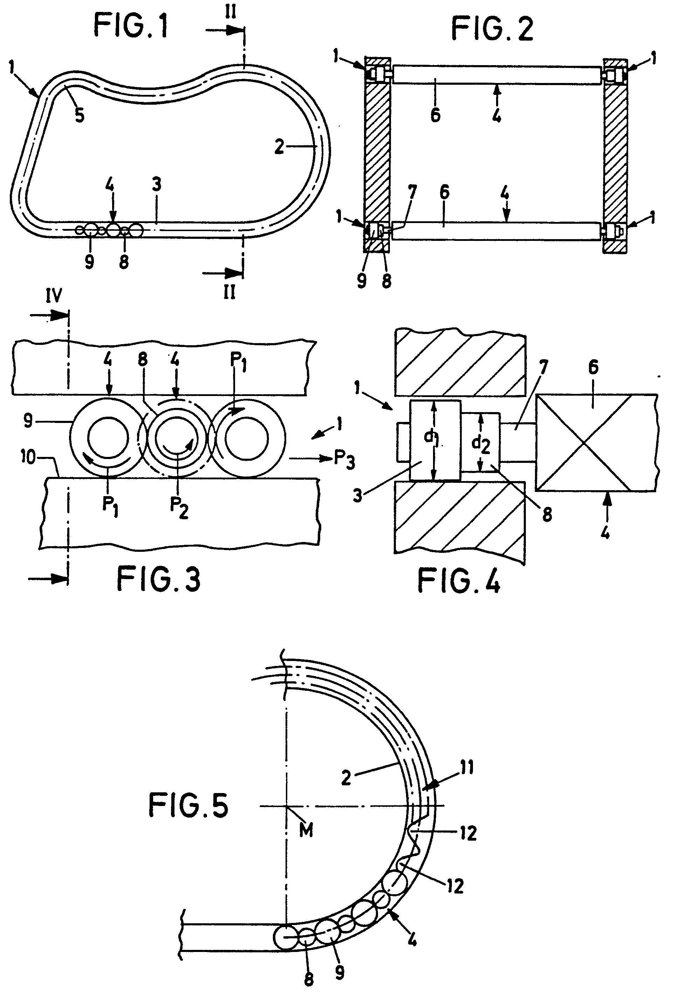

Fig. 1 zeigt beispielhaft eine Führungsbahn 1, um zu veranschaulichen, daß bei einer Realisierung der Erfindung eine derartige Führungsbahn völlig unterschiedlich ausgestaltete und gekrümmte Streckenabschnitte aufweisen kann. Insbesondere kann eine derartige Führungsbahn einen z. B. kreisbogenabschnittsförmig gekrümmten Streckenabschnitt 2 und einen linearen, z. B. als Bearbeitungsbereich dienenden Streckenabschnitt 3 aufweisen. Darüber hinaus können unterschiedlich gekrümmte, der Rückführung der Nadelstäbe 4 dienende Streckenabschnitte 5 vorgesehen sein. Im Ausführungsbeispiel sind die Nadelstäbe 4 stabförmig ausgebildet gezeichnet, wobei deren Grundkörper 6 jeweils seitliche Lageransätze 7 aufweist.

An jedem Lageransatz 7 sind als Drehlagerelemente zwei Rollen 8, 9 angeordnet. Eine der beiden Rollen 9 weist einen größeren Durchmesser $d_1$ als die andere Rolle $d_2$ auf. Die Rolle mit dem größeren Durchmesser $d_1$ füllt die Führungsbahn 1 weitgehend aus und liegt auf der einen Rollfläche 10 der Führungsbahn 1 flächig auf. Die andere Rolle 8 steht mit den die Führungsbahn 1 begrenzenden Flächen, insbesondere auch mit der Rollfläche 10 nicht in Berührung.

Insbesondere aus Fig. 3 wird deutlich, daß aufeinanderfolgende Nadelstäbe 4 mit Rollen 8 bzw. 9 größeren bzw. kleineren Durchmessers derart bestückt sind, daß abwechselnd solche Nadelstäbe 4 aufeinanderfolgen, bei welchen die jeweils größere Rolle 9 außen und die kleine Rolle 8 innen bzw. beim nächsten Nadelstab 4 die kleinere Rolle 8 außen und die größere Rolle 9 innen liegt. Die Pfeile P1 und P2 veranschaulichen die Drehrichtung der jeweiligen Rollen 8 bzw. 9 bei einem Antrieb der Nadelstäbe 4 in Richtung des Pfeils P3. Dabei wird deutlich, daß aufgrund der erfindungsgemäßen Anordnung jeweils nur solche Rollen 8 bzw. 9 aneinander abrollen, welche eine entgegengesetzte Drehrichtung aufweisen. Auf diese Weise wird sichergestellt, daß sowohl zwischen den Nadelstäben 4 und den Begrenzungen der Führungsbahn 1 als auch zwischen den Nadelstäben 4 untereinander nur eine reine Rollreibung auftritt. Hierdurch ist es möglich, auch in Richtung des Pfeils P3, also parallel zur Führungsbahn 1 verhältnismäßig hohe Kräfte bei großer Arbeitsgeschwindigkeit zu übertragen.

In Fig. 5 ist schematisch ein Regelrad 11 dargestellt, welches sich um den Drehmittelpunkt M dreht, und welches z. B. im Bereich des Abschnitts 2 der in Fig. 1 dargestellten Führungsbahn 1 angeordnet sein kann. Dieses Regelrad 11 weist an seiner Peripherie eine Mehrzahl von äquidistant angeordneten Ausnehmungen 12 auf, welche an den Nadelstäben 4 im Bereich der Lageransätze 7 angreifen und die Nadelstäbe 4 dementsprechend in diesem Bereich führen können. Darüber hinaus kann vorgesehen sein, daß das Regelrad 11 drehangetrieben ausgebildet ist und dementsprechend seine Drehbewegung auf die Nadelstäbe 4 als Antriebsbewegung für dieselben überträgt.

Umgekehrt kann auch eine durch einen beliebigen anderen Antrieb erzeugte Antriebsbewegung mittels des Regelrades von den Nadelstäben 4 abgeleitet werden.

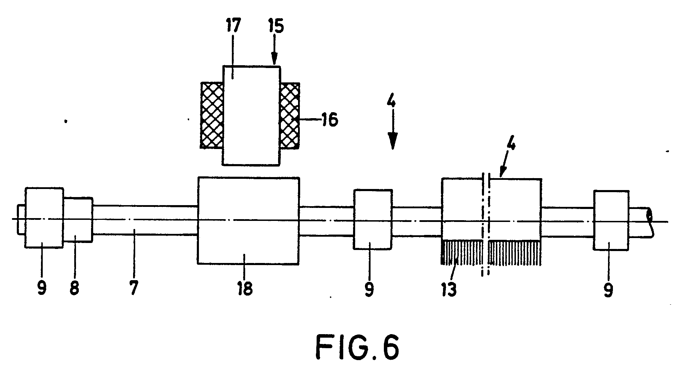

In Fig. 6 ist eine spezielle Ausführungsform der erfindungsgemäßen Vorrichtung dargestellt, und zwar deren Ausgestaltung als Streckkopf mit Linearantrieb. In einem derartigen Streckkopf ist eine Vielzahl von nebeneinander angeordneten Nadeln 13 tragenden Nadelstäben 4 parallel zueinander angeordnet. Längs einer Bearbeitungsstrecke, wie z. B. längs des Abschnitts 3 in Fig. 1, greifen die Nadeln dieser Nadelstäbe in ein zu verziehendes Vlies ein.

In dem in Fig. 6 dargestellten Ausführungsbeispiel ist die Lagerung der einzelnen Nadelstäbe 4 in mehreren, in der Zeichnung nicht dargestellten Führungsbahnen vorgesehen. Dabei erfolgt die Lagerung über Rollen 9, während wie im Zusammenhang mit Fig. 3 im einzelnen beschrieben die Abstandshaltung bzw. Kraftübertragung zwischen den einzelnen Nadelstäben durch Rollenkombinationen 8, 9 aus Rollen unterschiedlicher Durchmessers bewerkstelligt wird. Zum Antrieb der Nadelstäbe 4 dient eine Linearmotoranordnung, wie sie in dem deutschen Patent 3 028 376 näher beschrieben wird. Eine solche Linearmotoranordnung umfaßt eine Mehrzahl längs der Führungsbahn hintereinander angeordneter, umschaltbarer Elektromagneten 15 bestehend jeweils aus einer Wicklung 16 und einem Kern 17, welche im Zusammenwirken mit einem an einem Nadelstab 4 befestigten Magnetanker 18 eine Vorwärtsbewegung hervorrufen.

## Patentansprüche

1. Streckkopf für ein Streckwerk zum Führung und/oder Antreiben einer Mehrzahl längs einer geschlossenen Führungsbahn parallel zueinander umlaufender, in einem definierten Abstand voneinander gehaltener Nadelstäbe, dadurch gekennzeichnet, daß jeder Nadelstab (4) wenigstens zwei Drehlagerelemente (8, 9) unterschiedlichen Durchmessers ($d_1$, $d_2$) axial nebeneinander derart aufweist, daß die Drehlagerelemente (8, 9), wie z. B. Kugel-, Rollen- oder Walzenlager, jeweils benachbarter Nadelstäbe (4) so angeordnet sind, daß an jedem Drehlagerelement (9) größeren Durchmessers ($d_1$) zwei in Laufrichtung benachbarte Drehlagerelemente (8) kleineren Durchmessers ($d_2$) und an jedem Drehlagerelement (8) kleineren Durchmessers ($d_2$) zwei in Laufrichtung benachbarte Drehlagerelemente (9) größeren Durchmessers ($d_1$) anliegen, wobei die Drehachsen sämtlicher Drehlagerelemente (8, 9) von der Rollfläche (10) der Führungs-Bahn (1) den gleichen Abstand aufweisen.

2. Vorrichtung nach Anspruch 1, dadurch gekennzeichnet, daß an wenigstens einem kreisabschnittsförmigen Bahnabschnitt (2) ein an seiner Peripherie äquidistante Ausnehmungen (12) zum Eingriff an den Achsen der Nadelstäbe (4) aufweisendes Regelrad (11) angeordnet ist.

3. Vorrichtung nach Anspruch 2, dadurch gekennzeichnet, daß das Regelrad (11) als Antrieb für die Nadelstäbe (4) bzw. als Abtrieb von Nadelstäben (4) dient.

4. Vorrichtung nach Anspruch 1, dadurch gekennzeichnet, daß der Antrieb der Nadelstäbe (4) durch einen Linearmotor (15, 18) erfolgt.

5. Vorrichtung nach Anspruch 4, dadurch gekennzeichnet, daß jeder Nadelstab (4) wenigstens einen Magnetanker (18) trägt.

## Claims

1. A drawhead for drawing equipment for the guidance and/or drive of a plurality of fallers disposed parallel to one another in a closed guideway and kept at a predetermined distance from one another, characterized in that each faller (4) has at least two pivot bearing elements (8, 9) of differing diameter $(d_1, d_2)$ placed axially adjacent in such a manner that the pivot bearing elements (8, 9), as for example ball, roller or cylinder bearings, of adjacent fallers (4) are disposed in such a manner that each pivot bearing element (9) of larger diameter $(d_1)$ is adjoined in the direction of travel by two adjacent pivot bearing elements (8) with a smaller diameter $(d_2)$ and that each pivot bearing element (8) of smaller diameter $(d_2)$ is adjoined in the direction of travel by two adjacent pivot bearing elements (9) with larger diameter $(d_1)$, wherein the pivot axes of all pivot bearing elements (8, 9) are the same distance from the roller path (10) of the guideway (1).

2. A device in accordance with claim 1, characterized in that a regulating wheel (11) is disposed on at least one segment of the guideway (2) having the shape of a section of an arc, said regulating wheel (11) having around its perimeter equidistant recesses (12) which act on the axes of the fallers (4).

3. A device in accordance with claim 2, characterized in that the regulating wheel (11) serves as drive for the fallers (4) or, respectively, as a power take-off from fallers (4).

4. A device in accordance with claim 1, characterized in that the drive of the fallers (4) is by means of a linear induction motor (15, 18).

5. A device in accordance with claim 4, characterized in that each faller (4) is provided with at least one armature (18).

## Revendications

1. Tête d'étirage pour un dispositif d'étirage destiné au guidage et/ou à l'entraînement d'une multitude de barrettes se déplaçant parallèlement les unes aux autres le long d'une voie de guidage fermée et maintenue avec un écartement déterminé entre elles, caractérisé en ce que chaque barrette (4) présente au moins deux éléments de paliers tournants (8, 9), de diamètre différent $(d_1, d_2)$ qui sont juxtaposés dans le sens axial, de telle sorte que les éléments de paliers tournants (8, 9), tels que des paliers à billes, à roulements ou à rouleaux, des barrettes (4) qui les avoisinent sont disposés de manière telle que deux éléments de paliers tournants (8) de plus petit diamètre $(d_2)$ voisins dans le sens de la marche soient contigus à chaque élément de palier tournant (9) de plus grand diamètre $(d_1)$ et que deux éléments de paliers tournants (9) de plus grand diamètre $(d_1)$ dans le sens de la marche soient contigus à chaque élément de palier tournant (8) de plus petit diamètre $(d_2)$, les axes de rotation de tous les éléments de paliers tournants (8, 9) se trouvent par ailleurs à une même distance de la surface de roulement (10) de la voie de guidage (1).

2. Dispositif selon la revendication 1, caractérisé en ce qu'il est disposé sur au moins une partie de voie (2) en forme de segment de cercle une roue de réglage (11) présentant sur sa périphérie, des évidements équidistants (12) destinés à s'engrener sur les axes des barrettes (4).

3. Dispositif selon la revendication 2, caractérisé en ce que la roue de réglage (11) sert d'entraînement pour les barrettes (4) ou d'entraînement de sortie des barrettes (4).

4. Dispositif selon la revendication 1, caractérisé en ce que l'entraînement des barrettes (4) se fait par un moteur linéaire (15, 18).

5. Dispositif selon la revendication 4, caractérisé en ce que chaque barrette (4) comporte au moins une armature d'aimant (18).

FIG.1

FIG.2

FIG.3

FIG.4

FIG.5

FIG.6